# EUROPEAN PATENT APPLICATION

(11) **EP 1 091 500 A2**
(43) Date of publication of application: **11.04.2001**
(21) Application number: 00308380.5
(22) Date of filing: 25.09.2000
(51) Int. Cl.: H04B 1/707

(54) **Method and apparatus for reverse link energy estimation in a wireless network**

(30) Priority: 06.10.1999 US 413032
(71) Applicant: LUCENT TECHNOLOGIES INC., Murray Hill, New Jersey 07974-0636 (US)
(72) Inventor: Allpress, Stephen A., Hoboken, New Jersey 07030 (US); Hahm, Mark D., Flanders, New Jersey 07836 (US)
(74) Representative: Buckley, Christopher Simon Thirsk

(57) **Abstract**

A method and apparatus for finger energy estimation in a rake receiver of a wireless communications network assesses energy values from multiple rake fingers before estimating finger energy for an individual rake finger. In one implementation, an energy index generating unit receives a set of indexed energy values from each of a plurality of rake fingers, combines like-indexed energy values to obtain a set of indexed aggregate energy values, and selects a winning index based as the index which corresponds to the largest aggregate energy value in the set. The energy index generating unit outputs the winning index to the energy selector of an individual finger energy estimator, enabling the energy selector to select an energy value which corresponds to the winning index, and thereby ensure accurate finger energy estimation.

## Description

### Field Of The Invention

The present invention relates to the field of wireless communications.

### Description Of Related Art

Spread spectrum digital modulation techniques, and in particular direct sequence spread spectrum (DSSS) techniques, have been implemented in wireless communication systems, such as the Code Division Multiple Access (CDMA) system specified in the IS-95 Standard of the U.S. Telecommunication Industry Association (TIA). Using DSSS techniques, the IS-95 version of CDMA (hereinafter "IS-95 CDMA") combines low bit-rate communication signals, such as voice, data, and control signals, with high bit-rate pseudo-noise (PN) sequences to "spread" the power of each communication signal over a larger bandwidth, and thereby achieve robust signals which are less susceptible to interference. The intended receiver removes the PN sequence to "despread" the received signal and recover the low bit-rate communication signal. By assigning different PN sequences to mobile subscriber terminals ("mobiles") served by a single base station, a large number of mobiles are able to communicate with the serving base station using the same transmit/receive frequency bands. As such, the service capacity in an IS-95 CDMA system is typically limited only by the degradation of service quality caused by interference from nearby mobiles.

An IS-95 CDMA base station utilizes a plurality of rake receivers, each assigned to receive from a mobile being served by the base station. As is well known, a single rake receiver includes a plurality of "fingers," which independently receive and process the same radio frequency (RF) signal, and attempt to retrieve a baseband communication signal.

By combining the results of multiple fingers, the rake receiver achieves diversity gain to mitigate against fading effects caused by mobility and the wireless network environment. For example, to exploit the fact that a base station antenna(s) will typically receive multiple versions of the same RF signal transmitted from a mobile, each version having a different propagation delay (i.e., "multipath"), a rake receiver controller may assign each finger to process and demodulate a different multipath and combine results from multiples fingers, thereby achieving path diversity to enhance receiver performance. Alternatively, or additionally, the rake receiver controller may assign fingers to respectively process signals from spatially offset base station antennas.

Although a plurality of rake fingers independently recover a baseband communication signal from a received RF signal, the signal energy received by one or more fingers may be insignificant (e.g., characterized by extremely low signal-to-interference ratio), thereby providing little or no diversity gain. To monitor performance and statistically distinguish signals from noise so that a rake finger may be reassigned, e.g., to a different multipath, when receiving noise, the rake receiver in an IS-95 CDMA base station includes an energy estimator for each finger to estimate "finger energy" thereof. The conventional finger energy estimator computes the signal energy captured by the corresponding finger, averages multiple signal energy values, and derives an *E*_{*b*}*/N*_{*o*} estimate from each average signal energy value using a calibration table which maps energy values to *E*_{*b*}*/N*_{*o*} estimates.

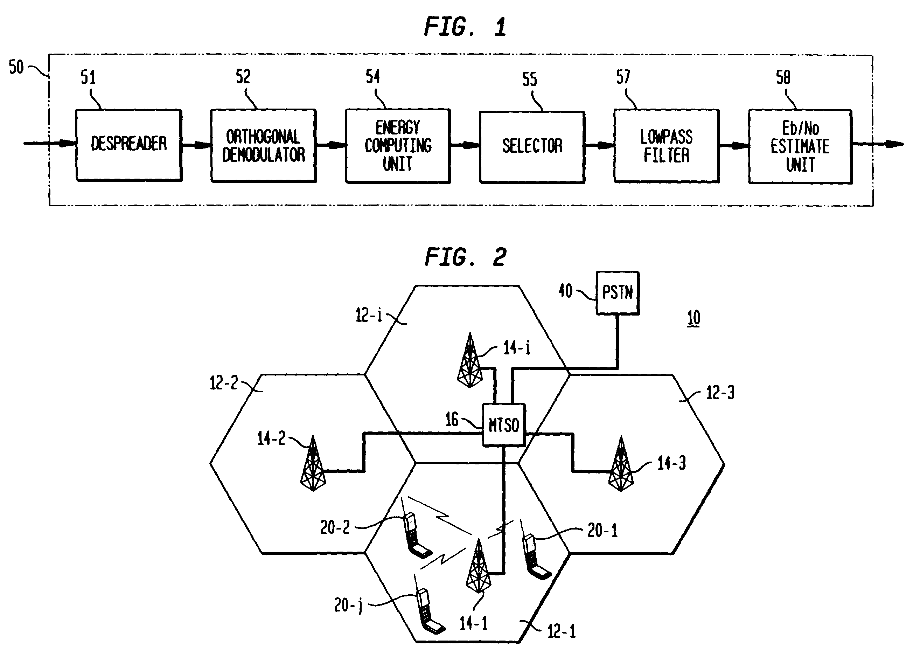

Figure 1 is a general block diagram which illustrates select processing components of a conventional finger energy estimator. As shown in Figure 1, a conventional finger energy estimator 50 includes a despreader 51, an orthogonal demodulator 52, an energy computing unit 54, a selector 55, a low-pass filter 57, and an *E*_{*b*}*/N*_{*o*} estimate unit 58. As is well known to those skilled in the art, baseband communication signals, such as audio signals, and data, to be transmitted over the reverse link (i.e., mobile to base station) channel in an IS-95 CDMA system are, in addition to being convolutional encoded and block interleaved, modulated using an M-ary orthogonal modulation scheme (typically 64-ary modulation) which is insensitive to phase, and direct-sequence spread prior to transmission. Consequently, each rake finger and corresponding finger energy estimator despreads and performs M-ary orthogonal demodulation on the received signal (subsequent to conventional RF signal processing performed by the receiver, such as band-pass filtering, amplification, frequency down-conversion, analog-to-digital conversion, etc.)

Referring again to Fig. 1, the despreader 51 removes the PN sequences which were combined with the baseband communication signal at the mobile, and the orthogonal demodulator 52 demodulates the output of the despreader 51, for example using a Fast Hadamard Transform (FHT). Using 64-ary modulation/demodulation as an example, characters of 6 symbol length (i.e., 2⁶ possible characters) are encoded using 64 bit (or "chip") Walsh codes at the mobile. Therefore, the orthogonal demodulator 52 outputs sixty-four complex signals corresponding to sixty-four possible transmitted Walsh codes which can each be represented by a six bit index.

The energy computing unit 54 calculates an energy value for each of the sixty-four outputs of the orthogonal demodulator 52 by squaring the real and imaginary parts of the complex signal output by the orthogonal demodulator 52, and adding the squared real and imaginary signal parts to obtain a set of sixty-four indexed energy values. Since each energy value in the set of indexed energy values calculated by the energy computing unit 54 represents the likelihood (or confidence) that the corresponding Walsh code is the correct demodulation result, the selector 55 chooses the greatest energy value from the set of sixty-four energy values output by the energy computing unit 54, and the low-pass filter 57 averages a number of energy selections received from the from selector 55. Finally, the *E*_{*b*}*/N*_{*o*} estimate unit 58 uses a correlation table to map each average energy value received from the low-pass filter 57 to an *E*_{*b*}*/N*_{*o*} estimate so that the rake receiver can resolve signals from noise for each finger.

Due to the fact that the Walsh symbol error rate per finger is typically large, however, the maximum energy value selected by the selector 55 often does not correspond to the correct Walsh code, thereby degrading the quality of the subsequent *E*_{*b*}*/N*_{*o*} estimate.

### Summary Of The Invention

The present invention is a method and apparatus for enhanced finger energy estimation in a rake receiver of a wireless communications network which assesses the energy values of multiple rake fingers before selecting an energy value to be used as an estimate for individual finger energy. According to one embodiment, an energy index generating unit receives a set of indexed energy values from each of a plurality of rake fingers, combines energy values having the same index to obtain a set of indexed aggregate energy values, and selects a winning index which corresponds to the greatest aggregate energy value. In one implementation of the present invention, the energy index generating unit adds energy values having the same index from multiple rake receivers to generate the set of indexed aggregate energy values. In an alternative implementation, the energy index generating unit statistically combines (e.g., calculating a median or mean) energy values having the same index from multiple rake fingers to generate the set of indexed aggregate energy values. The energy index generating unit outputs the winning index to the energy selector of at least one individual finger energy estimator so that the selector selects an energy value which corresponds to the winning index for finger energy estimation.

By determining a winning index as a function of the indexed energy values from a plurality of rake fingers before selecting an energy value used for individual finger energy estimation, estimation accuracy is enhanced, thereby improving the rake receiver's ability to monitor finger performance and statistically distinguish signals from noise.

### Brief Description Of The Drawings

Other aspects and advantages of the present invention will become apparent upon reading the following detailed description, and upon reference to the drawings in which:
Figure 1 is a general block diagram illustrating select components of a conventional finger energy estimator used in a base station rake receiver;
Figure 2 is a general block diagram illustrating an exemplary network configuration suitable for implementing embodiments of the present invention;
Figure 3 is a block diagram illustrating select components of a rake receiver according to an embodiment of the present invention; and
Figure 4 is a flow diagram illustrating finger energy estimation in accordance with an embodiment with the present invention.

### Detailed Description

The present invention is a method and an apparatus for enhanced finger energy estimation, applicable to a rake receiver of a wireless communication network, which selects an energy value used for individual finger energy estimation as a function of the energy values from multiple rake fingers. An illustrative embodiment of the method and apparatus for enhanced finger energy estimation according to the present invention is described below.

Referring to Figure 2, there is shown a wireless network configuration 10 suitable for implementing embodiments of the present invention. The wireless network configuration 10 includes a plurality of geographic sub-areas ("cells") 12-1, ..., 12-i. Each cell 12-1, ..., 12-i has a corresponding base station 14-1, ..., 14-i for providing communication service to mobiles located therein, such as mobiles 20-1, ..., 20-j located in cell 12-1. Each of the base stations 14-1, ..., 14-i is connected (e.g., via a trunk line) to a mobile telephone switching office (MTSO) 16. The MTSO 16 manages communication within the network, and serves as an interface between the wireless network and the Public Switched Telephone Network (PSTN) 40.

As will be apparent to those skill in the art, numerous variations on the wireless network configuration 10 illustrated in Figure 2 are possible. For example, each of these cell 12-1,...,12-i may be sub-divided into a number of sectors. Furthermore, although the cells 12-1, ..., 12-i are shown as hexagonal-shaped areas, different cell shapes are possible.

As discussed above, IS-95 CDMA base stations each utilize a plurality of rake receivers which are respectively assigned to receive communication from different mobiles being served by the base station. Although the following discussion of a preferred embodiment of the present invention assumes for illustration purposes that the wireless network configuration 10 illustrated in Figure 2 operates in accordance with IS-95 CDMA, it should be readily apparent to those skilled in the art that principles of the present invention are not limited to IS-95 CDMA, and instead may be implemented to enhance finger energy estimation in any rake receiver which performs orthogonal demodulation.

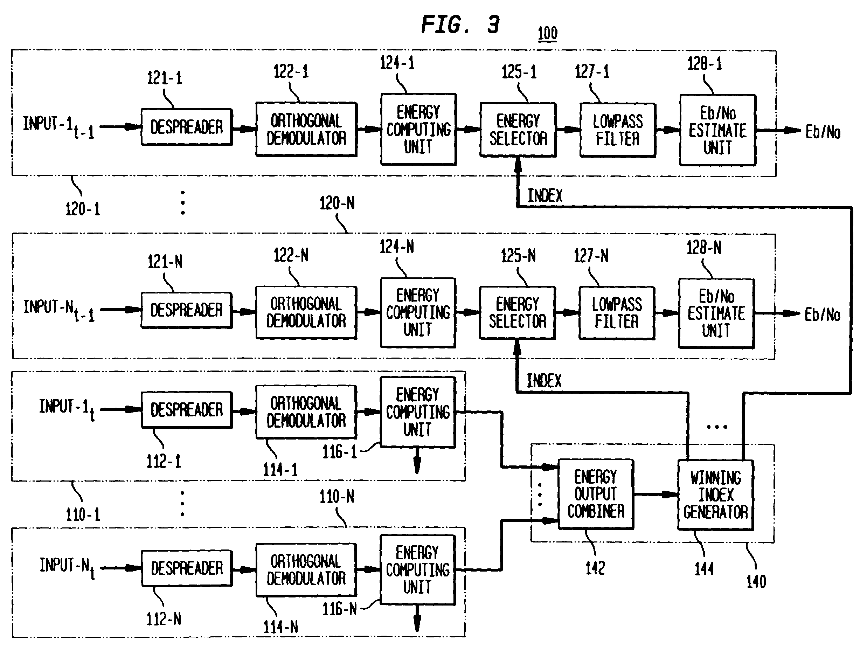

Referring to Figure 3, there is shown a block diagram illustrating select components of a rake receiver 100 according to an embodiment of the present invention. As illustrated in Figure 3, the rake receiver 100 includes a plurality of fingers 110-1, ..., 110-N; a plurality of finger energy estimators 120-1, ..., 120-N; and an energy index generator 140. As discussed above, each finger of a rake receiver independently receives and processes an RF signal to retrieve a baseband communication signal, whereby, by combining the results of multiple fingers, the rake receiver achieves enhanced receiver error rates. Accordingly, each finger 110-1, ..., 110-N may be assigned to a different reverse link multipath. Alternatively, or additionally, at least two of the fingers 110-1, ..., 110-N may be assigned to process the signals from spatially offset base station receive antennas.

As is well known to those skilled in the art, digital baseband communication signals to be transmitted via the reverse link in an IS-95 CDMA system undergo a series of digital signal processing operations before being combined with an RF carrier which is radiated by the mobile's antenna. More specifically, a digital baseband communication signal, for example having a nominal data rate of 9600 bps, is error correction coded by a convolutional encoder to produce 28,800 binary symbols per second. The convolutional encoder output is then block interleaved to protect against the effects of fading, and are grouped into six symbol characters, (i.e., 2⁶ possible characters) which are replaced by a corresponding 64-chip Walsh Code during 64-ary modulation, thereby resulting in a chip rate of 307,200 chips per second. The Walsh chips resulting from orthogonal modulation are then multiplied by a unique user PN sequence ("long code mask") assigned to the mobile at a rate of 1.2288 MHz. Next, long code masked Walsh chips are combined with a base station-specific PN sequence, resulting in an quadrature phase shift keying (QPSK) output.

Due to the spread-spectrum processing and M-ary modulation performed at the mobile, each rake finger 110-1, ..., 110-N includes a despreader 112-1, ..., 112-N, and an orthogonal demodulator 114-1, ..., 114-N. Each despreader 112-1, ..., 112-N removes the long code mask and base station specific PN sequences from an input signal input-1ₜ, .., input-Nₜ, and outputs the result to the orthogonal demodulator 114-1, ..., 114-N to perform orthogonal demodulation, for example using a FHT. Assuming 64-ary demodulation, the orthogonal demodulator 114-1, ..., 114-N outputs sixty-four complex signals corresponding to the sixty-four possible transmitted Walsh codes, which can each be represented by a six bit index. The energy computing unit 116-1, ..., 116-N of each rake finger 110-1, ...,. 110-N calculates an energy value for each of the sixty-four outputs from the orthogonal demodulator 114-1, ..., 114-N by squaring the real and imaginary signal parts of each complex signal and adding the squared real and imaginary signal parts to obtain a set of sixty four indexed energy values. Although not illustrated in Figure 3 or discussed in detail herein, the output of the energy computing unit 116-1, ..., 116-N is subsequently used by the rake finger 110-1, ..., 110-N to recover a baseband communication signal. As discussed in detail below, the set of sixty-four indexed energy values computed by each energy computing unit 116-1, ..., 116-N is further utilized by the energy index generator 140 in a manner described below to enhance individual finger energy estimation.

As illustrated in Figure 3, each finger energy estimator 120-1, ... 120-N likewise includes a despreader 121-1, ..., 121-N; an orthogonal demodulator 122-1, ..., 122-N; and an energy computing unit 124-1, ..., 124-N. Because these components perform the same operations discussed above with regard to corresponding components of the rake finger 110-1, ..., 110-N, further discussion of such components is omitted herein. Each finger energy estimator 120-1, ..., 120-N further includes an energy selector 125-1, ..., 125-N, which selects one energy value for each set of indexed energy values output by the energy computing unit 124-1, ..., 124-N in accordance with an index received by the energy index generator 140. Each finger energy estimator 120-1, ..., 120-N further includes a low-pass filter 127-1, ..., 127-N which averages a number of energy selection outputs of the energy selector 125-1, ..., 125-N, and an *E*_{*b*}*/N*_{*o*} estimate unit 128-1, ..., 128-N which outputs an *E*_{*b*}*/N*_{*o*} estimate for each average energy value received from the low-pass filter 127-1, ..., 127-N, for example using a conventional correlation table.

Although each finger energy estimator 120-1, ..., 120-N receives the same input as a corresponding rake finger 110-1, ..., 110-N, latency is introduced because the energy selector 125-1, ..., 125-N selects an energy value from the set of indexed energy values output by the energy computing unit 124-1, ..., 124-N based on a winning index which the index generating unit 140 computes as a function of energy values from multiple rake fingers 110-1 ...., 110-N. Such latency is signified by the use of input-1ₜ₋₁,..., input-Nₜ₋₁ as the inputs to the despreaders 121-1, ..., 121-N of the finger energy estimators 120-1, ..., 120-N.

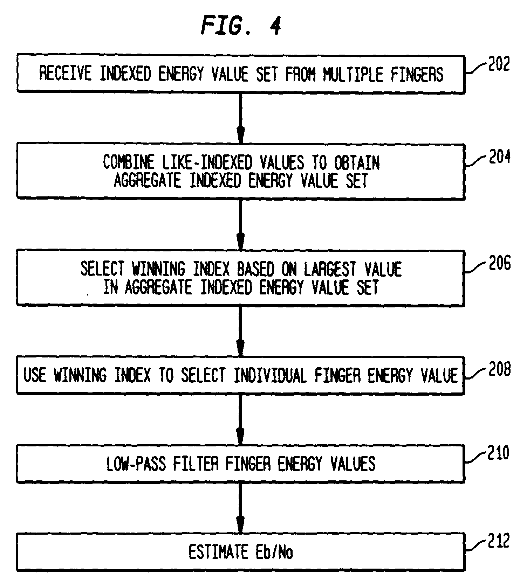

The operation of the index generating unit 140 for generating energy index values used for finger energy estimation, and energy estimation based on an index output by the index generating unit 140, will next be described with reference to the flow diagram of Figure 4. Initially, the energy output combiner 142 receives separate sets of indexed energy values from rake fingers 110-1, ..., 110-N, and more specifically receives sets of indexed energy values from the energy computing units 116-1, ..., 116-N of rake fingers 110-1, ..., 110-N (Step 202). As discussed above, assuming 64-ary modulation, each set of indexed energy values received by the energy output combiner 142 includes sixty-four energy values corresponding to sixty-four possible Walsh codes. Although in the embodiment illustrated in Figure 3 the energy output combiner 142 receives a set of energy values from all of the rake fingers 110-1, ..., 110-N, the energy output combiner 142 may receive energy value sets from less than all rake fingers.

The energy output combiner 142 combines the received sets of indexed energy values to generate a set of indexed aggregate energy values (Step 204). In one implementation, the energy output combiner 142 adds energy values from each received energy value set having the same index. Alternatively the energy output combiner 142 may perform a statistical averaging, computing a median or mean of energy values having the same index to generate the set of indexed aggregate energy values. The winning index generator 144 receives the set of indexed aggregate energy values from the energy output combiner 142, and selects a winning index based on the largest aggregate value in the set (Step 206). The winning index generator 144 then outputs the winning index to the energy selector 125-1, ..., 125-N of each finger energy estimator 120-1, ..., 120-N, which uses the winning index to select an individual energy value from the set of indexed energy values output by the energy computing unit 124-1, ..., 124-N (Step 208). As discussed above, the low-pass filter 127-1, ..., 127-N of the finger energy estimator 120-1, ..., 120-N averages a plurality of selected energy values output by the energy selector 125-1, , 125-N (Step 210). Finally, the *E*_{*b*}*/N*_{*o*} estimate unit 127-1, ..., 127-N outputs an *E*_{*b*}*/N*_{*o*} value for each averaged energy value output by the low-pass filter 127-1, ..., 127-N (Step 210).

By determining a winning index as a function of the indexed energy values from a plurality of rake fingers, and using such a winning index to select an energy value as an individual finger energy estimation, the accuracy of energy estimation is improved by achieving an improved Walsh symbol error rate as compared to individual finger performance, thereby improving the rake receiver's ability to monitor performance and statistically distinguish signals from noise.

Although the present invention has been described in considerable detail with reference to certain embodiments, it should be apparent to those skilled in the art that various modifications and applications of the present invention may be realized without departing from the spirit and scope of the invention.

## Claims

1. A method of estimating finger energy in a wireless network rake receiver, comprising:
combining energy values from a plurality rake fingers to obtain an aggregate energy values; and
selecting an energy value for an individual rake finger as a function of the aggregate energy values.

2. The method of claim 1, further comprising:
receiving a set of M indexed energy values from each of the plurality of rake fingers;
wherein said combining step combines received sets of M indexed energy values to generate a set of M indexed aggregate energy values.

3. The method of claim 2, further comprising:
selecting a winning index from the set of M indexed aggregate energy values;
wherein said selecting step selects an energy value which corresponds to the winning index.

4. The method of claim 3, wherein
said combining steps adds like-indexed energy values; and
said step of selecting a winning index selects an index corresponding to the largest value in the set of M indexed aggregate energy values.

5. The method of claim 3, wherein
said combining step statistically averages like-indexed energy values; and
said step of selecting a winning index selects an index corresponding to the largest value in the set of M indexed aggregate energy values.

6. The method of claim 1, wherein said rake receiver is a base station rake receiver in a Code Division Multiple Access (CDMA) system.

7. The method of claim 2, wherein M is sixty-four, and each energy value in the set of sixty-four energy values corresponds to a different Walsh code.

8. The method of claim 1, further comprising:
outputting a value representing the ratio of energy per bit, *E*_{*b*}, to interference, *N*_{*o*}, based on the selected energy value.

9. The method of claim 8, further comprising:
averaging a plurality of energy values selected by said selecting step;
wherein said step of outputting uses an average energy value calculated by said averaging step.

10. An apparatus for estimating finger energy in a wireless network rake receiver, comprising:
an energy combiner for combining energy values from a plurality of rake fingers to obtain aggregate energy values; and
a selector for selecting an energy value as a function of the aggregate energy values.

11. The apparatus of claim 1, wherein
said energy combiner receives a set of M indexed energy values from each of the plurality of rake fingers, and combines the received sets of M indexed energy values to generate a set of M indexed aggregate energy values.

12. The apparatus of claim 11, further comprising:
a winning index generator for selecting a winning index from the set of M indexed aggregate energy values generated by said energy combiner;
wherein said selector selects an energy value which corresponds to the winning index.

13. The apparatus of claim 12, wherein
said energy combiner adds like-indexed energy values; and
said winning index generator outputs a winning index which corresponds to the largest value in the set of M indexed aggregate energy values.

14. The apparatus of claim 12, wherein
said energy combiner statistically averages like-indexed energy values; and
said winning index generator outputs a winning index which corresponds to the largest value in the set of M indexed aggregate energy values.

15. The apparatus of claim 10, wherein said rake receiver is a base station rake receiver in a Code Division Multiple Access (CDMA) network.

16. The apparatus of claim 11, wherein M is sixty-four, and each energy value in the set of sixty-four energy values corresponds to a different Walsh code.

17. The apparatus of claim 10, further comprising:
output means for outputting a value representing the ratio of energy per bit, *E*_{*b*}, to interference, N_{o'} based on the energy value selected by said selector.

18. The apparatus of claim 17, further comprising:
a low-pass filter for averaging a plurality of energy values selected by said selector;
wherein said output means uses an average energy value calculated by said low-pass filter.
